# EUROPEAN PATENT APPLICATION

(11) **EP 1 853 000 A1**
(43) Date of publication of application: **07.11.2007**
(21) Application number: 06840682.6
(22) Date of filing: 28.12.2006
(51) Int. Cl.: H04L 9/32

(54) **SUBSCRIBER AUTHORIZATION METHOD AND SYSTEM, AND AUTHORIZATION CONTROLLING SYSTEM AND TERMINAL DEVICE THEREOF**

(30) Priority: 31.12.2005 CN 200510121536
(71) Applicant: Huawei Technologies Co Ltd, Longgang District Shenzhen 518129 (CN)
(72) Inventor: JIA, Haibo, Shenzhen, Guangdong 518129 (CN); LIU, Zheng, Shenzhen, Guangdong 518129 (CN)
(74) Representative: Körber, Martin Hans
(86) International application number: PCT/CN2006/003646
(87) International publication number: WO 2007/076694

(57) **Abstract**

A method for transmitting an authorization message to terminals includes: transmitting an authorization message on a transmission network through group-based multicast; performing authentication according to a multicast address, receiving the authorization message, parsing the authorization message to obtain authorization data of a subscriber, and performing authorization according to the authorization data.. A subscriber authorization system includes an authorization control system and a plurality of terminal devices; an authorization control system includes a subscriber group-based multicast unit, a message encapsulating unit and a message transmitting unit; and a terminal device includes authentication unit and message parsing unit are disclosed as well. According to the above schemes, authorization is accomplished through group-based multicast, so the bandwidth requirement is reduced and time for transmitting the authorization message is saved.

## Description

### Field of the Invention

The present invention relates to multimedia communication technology, and particularly, to a subscriber authorization system and method and an authorization control system and terminal device in which the method is applied.

### Background of the invention

Digital video/audio services, with outstanding image quality and diversified service modes, are gradually replacing analog Television (TV) services in the daily life. Subscription channels (e.g., Near Video On Demand (NVOD)), employ corresponding charging methods to assure the operation of value-added services, and information encryption is thus required services. Programs of certain categories are provided only for authorized subscribers. Therefore in the operation of value-added services, Digital Rights Management (DRM) system and Condition Access System (CAS) are carried out. The management method for the DRM system includes: managing the distribution, transmission and utilization of digital products by using technical means so that the digital products can only be utilized by authorized subscribers in authorized manners during the valid period of the authorization.

The CAS is the core technical support for management in receiving media services in digital TV (e.g., satellite, terrestrial and cable), Internet Protocol television (IPTV), mobile TV, cell phone TV and other broadcast and multicast services. The CAS is able to manage and control digital multimedia services according to time, channels and programs according to different conditions. Condition access is a technical means allowing only authorized subscribers to access certain services and blocks all the unauthorized subscribers.

Because the CAS performs authorization management and receiving control of varieties of digital TV broadcast services, at clients, unauthorized subscribers are unable to descramble scrambled programs and thus unable to receive the programs.

In media services including digital TV (e.g., satellite, terrestrial and cable), IPTV, mobile TV, cell phone TV and other broadcast or multicast services, the CAS packs a number of channels into a product. When a subscriber subscribes to the product, the CAS authorizes the subscriber by sending a message. The message is usually transmitted to terminal devices through an Entitlement Management Message (EMM) in the CAS. The present broadcast and TV network is unidirectional, therefore the authorization message is sent to clients in a unidirectional manner. For example, if there are 1 million subscribers in the network, the system need to send 1 million EMMs to 1 million corresponding cards of the subscribers (a card equals to a subscriber in the CAS), i.e., 1 million cards require 1 million authorization messages. Along with the increase of subscribers and programs, the amount of EMMs broadcasted will increase continuously. What's more, the CAS is unable to verify whether a subscriber has received the authorization message, because the terminal of the subscriber may be turned off when the EMM is sending. The CAS has to send the authorization messages repeatedly in a long period of time.

In a normal CAS, an EMM including the header and every sub-message, after being multiplexed to transmission streams, is expanded to a fixed size of 188 bytes. A cable TV station usually needs to support 1 million subscribers and 64 channels. If a CAS packs the 64 channels into 10 products, the system then has to send 10 EMMs to each of the 1 million cards corresponding to the 1 million subscribers, and the total message size is 1 M×10× 188B=1880MB. When bandwidth of 50Kbps is allocated for EMM transmission, (1880×1000×8)kb/(50kbps)=300,800 seconds are needed to transmit the EMMs to each of the 1 million subscribers once. Data transmitted on the digital TV broadcast network includes video streams, audio streams and other system data streams. When the EMMs in CAS occupy much bandwidth, the bandwidth provided for programs will decrease. In addition, the capability of scramblers or multiplexers is limited, so the bandwidth provided for EMM data streams on head-end equipment is limited.

The technology in the preceding description is also applied in DRM system. How to effectively reduce the bandwidth occupied by EMMs during the subscriber authorization process is a problem needed to be solved badly.

### Summary of the Invention

The present invention provides a subscriber authorization method, includes:
transmitting an authorization message on a transmission network through group-based multicast;
performing authentication according to a multicast address, accepting the authorization message, parsing the authorization message to obtain authorization data of a subscriber, and performing authorization according to the authorization data.

The present invention also provides a subscriber authorization system, includes; an authorization control system, configured to group the subscriber, determine a multicast address according to a common address attribute of a group, encapsulate an authorization message and transmit the authorization message on a transmission network;
a plurality of terminal devices, each of which is configured to perform authentication according to the multicast address, receive the authorization message, parse the authorization message and obtain the authorization data, and perform authorization according to the authorization data.

The present invention also provides an authorization control system, includes:
a subscriber group-based multicast unit, configured to group subscribers according to a subscriber group policy and determine a multicast address according to the common address attribute of a group;
a message encapsulating unit, configured to encapsulate the multicast address, authorization data and a product identity into an authorization message; and
a message transmitting unit, configured to transmit the authorization message.

The present invention also provides a terminal device, includes:
an authentication unit, configured to perform authentication according to a common address attribute;
a message parsing unit, configured to parse an authorization message to obtain authorization data after the common address attribute is authenticated, and perform authorization according to the authorization data.

It can be seen from the above technical scheme that, the authorization message is transmitted to the terminal devices through subscriber group-based multicast to authorize the subscribers who have subscribed to the product. The problem associated with the authorization method with unicast is solved; and the bandwidth requirement is reduced.

### Brief Description of the Drawings

Figure 1 is a flow chart illustrating the basic principle of the subscriber authorization method according to an embodiment of the present invention.
Figure 2A is a schematic diagram of a digital TV subscriber authorization system according to an embodiment of the present invention.
Figure 2B is a schematic diagram of an authorization management system in the digital TV system according to an embodiment of the present invention.
Figure 2C is a schematic diagram of a terminal device in the digital TV system according to an embodiment of the present invention.
Figure 2D is a schematic diagram of the frame structure of an EMM according to an embodiment of the present invention.
Figure 2E is a schematic diagram of the frame structure of an EMM according to an embodiment of the present invention.
Figure 2F is a schematic diagram of the frame structure of an EMM according to an embodiment of the present invention.
Figure 3A is a schematic diagram of a subscriber authorization system in a cell phone TV system according to an embodiment of the present invention.
Figure 3B is a schematic diagram of an authorization management system in the cell phone TV system according to an embodiment of the present invention.
Figure 3C is a schematic diagram of a terminal device in the cell phone TV system according to an embodiment of the present invention.
Figure 3D is a flow chart showing the subscriber authorization method according to an embodiment of the present invention.

### Detailed Description of the Invention

According to embodiments of the present invention, in a subscriber authorization method, an authorization management system packs channels into a product and transmits an authorization message to terminal devices through group-based multicast to authorize subscribers who have subscribed to the product. Before transmitting the authorization message to authorize the subscribers, a multicast address of a group is determined. Because every card has a unique card address, a number of cards with a common address attribute are set in the group. During the authorization process concerning a product (a product is a channel package including a plurality of channels and is the basic unit in the card authorization process), the authorization management system encapsulates authorization data, a product identity and the multicast address into an authorization message and transmits the authorization message to terminal devices of subscribers through group-based multicast; a terminal device of a subscriber belonging to the group identified by the authorization message parses the authorization message upon receiving the authorization message, obtains information of whether the subscriber has subscribed to the product and performs authorization on the subscriber according to the information of whether the subscriber has subscribed to the product.

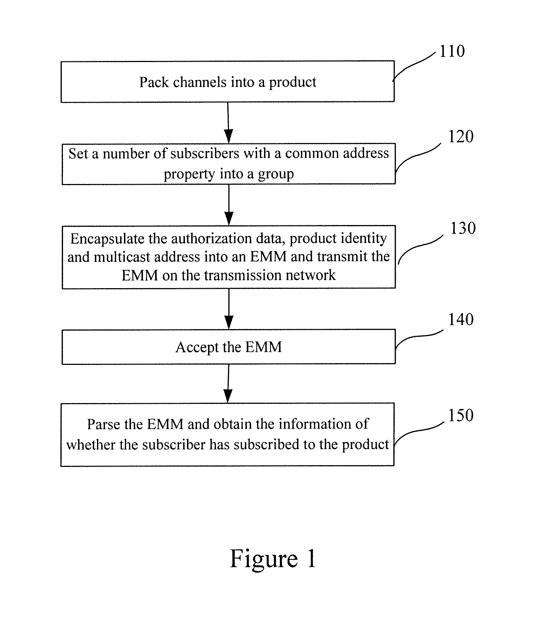

Figure 1 is a flow chart illustrating the basic principle of the subscriber authorization method according to an embodiment of the present invention. In this embodiment, the authorization message is an Entitlement Management Message (EMM). The subscriber authorization method is as follows.

Block 110: The authorization management system packs channels into a product and generates a product identity.

Block 120: The authorization management system sets a number of subscribers with a common address attribute in a group, according to a subscriber group policy.

The subscriber group policy is: grouping subscribers according to the card addresses of the subscribers, for example, setting a fixed number of subscribers with continuous card addresses in a group. Parameters related to card, including group key (GK) and SK' in an authorization message, are distributed when a subscriber activates a card. The SK' is obtained by encrypting service key (SK) with GK. Upon receiving an EMM, a terminal device decrypts SK' with GK saved by the terminal to obtain SK. The terminal device decrypts an Entitlement Control Message (ECM) with SK to obtain a Control Word (CW), and finally de-scrambles program streams with CW to receive programs.

Block 130: The authorization management system encapsulates authorization data, the product identity and the multicast address into an EMM, and transmits the EMM on the transmission network.

The multicast address is determined according to the common address attribute of the group described in Block 120. The authorization data indicates the card address of each subscriber and whether the subscriber has subscribed to the product.

Block 140: A terminal device of a subscriber belonging to the group identified by the EMM receives the EMM.

The terminal device authenticates the subscriber according to the common address attribute of the group; if the card address of the subscriber corresponds to the common address attribute identified by the EMM, in other words, the subscriber belongs to the group identified by the EMM, the terminal device receives the EMM; otherwise, the terminal device does not receive the EMM.

Block 150: The terminal device parses the EMM and obtains the authorization data of the subscriber and further obtains the information of whether the subscriber has subscribed to the product.

The present invention is hereinafter further described in detail with reference to the accompanying drawings and embodiments so as to make the technical solution and merits thereof more apparent.

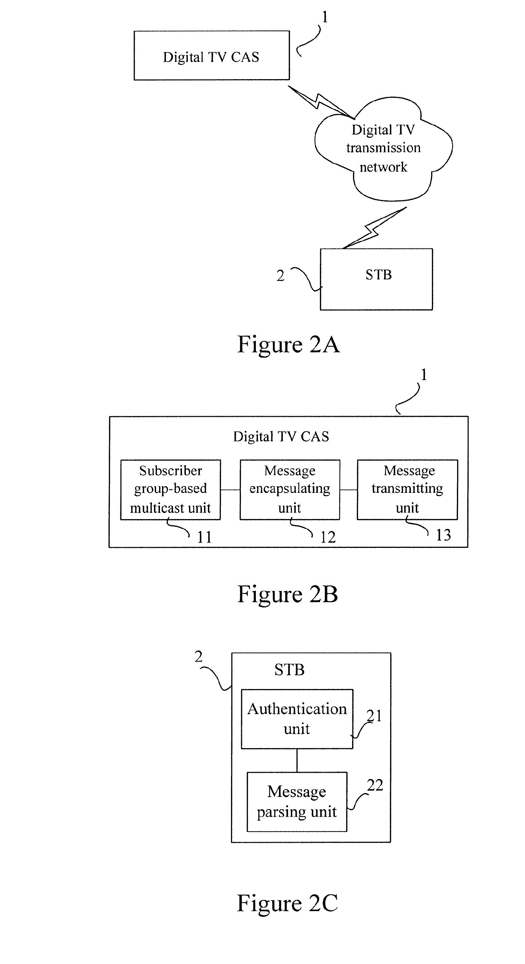

A subscriber authorization system applied to a digital TV system will be demonstrated in some embodiments of the present invention. As shown in Figure 2A, a subscriber authorization system includes an authorization management system and a terminal device. The authorization management system transmits an authorization message on a transmission network to the terminal device through group-based multicast. The terminal device authenticates a subscriber associated with the terminal device according to the multicast address, receives the authorization message after the subscriber has passed the authentication, parses the authorization message, obtains authorization data of the subscriber and performs authorization on the subscriber according to the authorization data. In one embodiment herein the authorization management system is a Digital TV Condition Access System (CAS) 1 or a Digital Rights Management (DRM) system, the terminal device is a Set-Top Box (STB) 2. The transmission network of the digital TV system is a digital TV network, e.g., Digital Satellite TV (DSTV) network, Digital TV Terrestrial Broadcast (DTTB) network, cable TV (CATV) network or IP network. The authorization management system provides group-based multicast for subscribers, so the bandwidth requirement can be reduced and the time for transmitting the authorization messages can be saved.

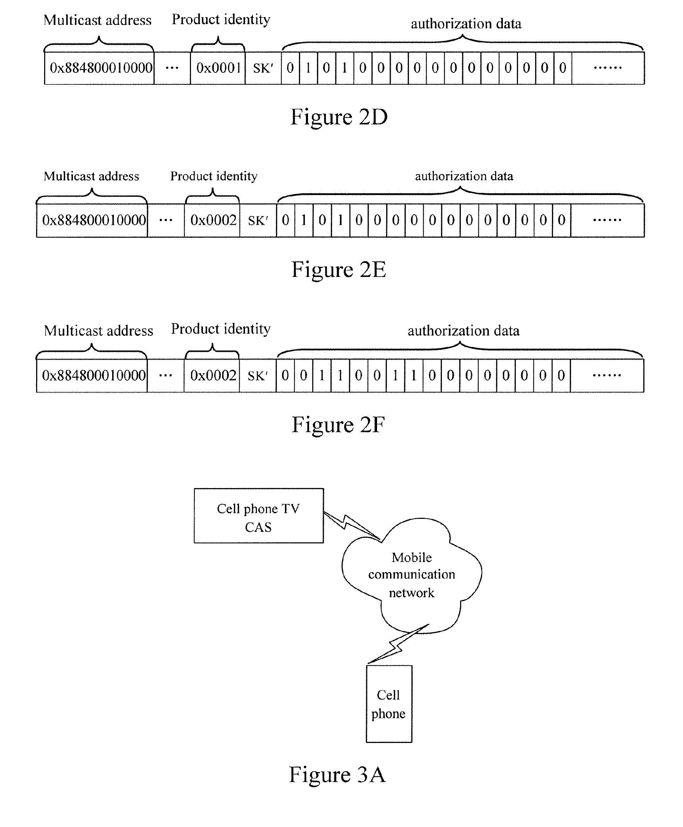

Figure 2B is a schematic diagram of the authorization management system, i.e., Digital TV CAS 1, according to an embodiment of the present invention. As shown in Figure 2B, Digital TV CAS 1 includes:
subscriber group-based multicast unit 11, used for setting a number of subscribers in a group according to subscriber group policy and determining a multicast address according to the common address attribute of the group; for example, the first 38 bits of the card address 0x884800010000, which includes 6 bytes (48 bits), are taken as the common address attribute of a group, and the subscriber group policy is that a fixed number of subscribers with continuous card addresses should be set in a group, for example, 1024 subscribers whose card addresses are 0×884800010000, 0×884800010001, 0×884800010002..., 0×8848000103FF respectively should be set in a group;
message encapsulating unit 12, used for encapsulating the multicast address, authorization data and a product identity into an authorization message; for example, the frame structure of the authorization message is shown in Figure 2D, in which
the multicast address is 0x884800010000;
the product identity is 0x0001 indicating Product 1 which includes eight TV channels: CCTV1, CCTV2... CCTV8; and
the authorization data, of which each bit indicates a card address of a subscriber and whether the subscriber has subscribed to the product; each bit can be 0 or 1, and 0 indicates the subscriber has not subscribed to the product while 1 indicates the subscriber has subscribed to the product;
message transmitting unit 13, used for transmitting the authorization message.

The digital TV CAS including the subscriber group-based multicast unit and the message encapsulating unit is able to transmit EMMs to subscribers through group-based multicast to authorize the subscribers who have subscribed to the product. And the problem associated with the authorization method with unicast in the existing art is solved. Because the multicast address and the authorization data are employed to authorize subscribers in groups, the time for transmitting authorization messages to each of the subscribers once is shortened.

Figure 2C is the schematic diagram of an STB, i.e., the terminal device, according to an embodiment of the present invention. As shown in Figure 2C, STB 2 includes:
authentication unit 21, used for authenticating a subscriber associated with the STB according to the common address attribute, for example, authenticating the subscriber according to the common address attribute associated with the first 38 bits of the card address 0x884800010000; receiving the EMM if the card address of the subscriber corresponds to the common address attribute, for example, if the card address of the subscriber is 0×884800010001, authentication unit 21 can receive the EMM in which the multicast address is 0×884800010000, if the card address of the subscriber is 0×888800010000, authentication unit 21 can not receive the EMM in which the multicast address is 0×884800010000;
message parsing unit 22, used for parsing the EMM after the subscriber has passed the authentication, obtaining authorization data and performing authorization according to the authorization data: performing authorization on the subscriber who has passed the authentication, if a bit corresponding to the card address of the subscriber is 1, the bit indicates that the subscriber can receive the authorization; if the bit corresponding to the card address of the subscriber is 0, the bit indicates that the subscriber can not receive the authorization and previous authorization concerning the product is to be cleared.

The STB including the authentication unit and the message parsing unit is able to authenticate the subscriber in a group according to the multicast address, and if the subscriber has passed the authentication, the STB receives the authorization message and performs authorization.

The STB shown in Figure 2C may be connected to a common TV set to form a terminal device with video/audio play function; the message parsing unit parses the EMM, receives the authorization, and obtains SK, decrypts an ECM with SK to obtain CW, and eventually de-scrambles program streams with CW. After that the normal TV set can play the received digital multimedia programs.

A new method of subscriber authorization is introduced in an embodiment. As shown in Figure 2B, a subscriber group-based multicast unit and a message encapsulating unit are added to the digital TV CAS of the digital TV system. So the digital TV CAS is improved. In the method, subscribers are divided into groups and a common multicast address is assigned to subscribers in a group; each bit of the authorization data indicates the card address of a subscriber and whether the subscriber has subscribed to the product; thus the bandwidth requirement is reduced. The number of subscribers in a group in the embodiment may be 512, and the first 39 bits of the card address 0x884800010000, which includes 6 bytes (48 bits), may be taken as the common address attribute of the group; and the subscriber group policy may be that a fixed number of subscribers with continuous card addresses should be set in a group, e.g., 512 subscribers whose card addresses are 0x884800010000, 0x884800010001, 0x884800010002..., 0x8848000101FF respectively should be set in a group; a subscriber may also be indicated by each two bits in the EMM.

Digital TV DRM may be adopted as the subscriber authorization management system in the digital TV system, in other words, the subscriber group-based multicast unit and the message encapsulating unit may be added into the digital TV DRM, and the subscriber group-based multicast unit and the message encapsulating unit are similar to the units shown in Figure 2B concerning both the functions and the structures and thus will not be detailed here.

The subscriber authorization method in accordance with the following Embodiments is according to the subscriber authorization system of the digital TV system described above.

In an embodiment of the present invention, if the number of subscribers, the average number of the subscribed products and the reserved bandwidth are fixed, time for transmitting authorization messages is determined according to the multicast implementation method of the CAS, in other words, time for transmitting the authorization messages is determined according to the number of subscribers which a signal multicast authorization message can authorize. If a group includes 1024 subscribers, the authorization process performed by the CAS is described hereinafter. In the authorization process the subscribers who have subscribed to a product are authorized by a multicast EMM. The authorization process is as follows.

2210: The digital TV CAS packs channels into products; for example, Product 1 includes CCTV1, CCTV2...CCTV8, Product 2 includes Phoenix TV, Product 3 includes ... etc.

2220: The digital TV CAS sets a number of subscribers with a common address attribute in a group according to a subscriber group policy; for example, the first 38 bits of the card address 0×884800010000, which includes 6 bytes (48 bits), are taken as the common address attribute of a group, and the subscriber group policy is that a fixed number of subscribers with continuous card addresses should be set in a group, e.g., 1024 subscribers whose card addresses are 0x884800010000, 0x884800010001, 0x884800010002..., 0x8848000103FF respectively should be set in a group.

230: The digital TV CAS encapsulates the authorization data, the product identity and the multicast address into an EMM, and transmits the EMM on the transmission network; for example, the EMM herein is shown in Figure 2, in which the parameters related to this embodiment include a multicast address with 6 bytes, a product identity with 4 bytes, an SK' with 16 bytes and authorization data with 128 bytes, in which
the multicast address is set as 0x884800010000;
the product identity is set as 0x0001, indicating Product 1 which includes eight TV channel including CCTV1, CCTV2... CCTV8;
SK' is the encrypted SK, and an STB will decrypt SK' with GK saved by the STB to obtain SK upon receiving the EMM; and
the authorization data, of which each bit indicates a card address (subscriber) and whether a subscriber has subscribed to the product; each bit can be set as 0 or 1, and 0 indicates a subscriber has not subscribed to the product while 1 indicates a subscriber has subscribed to the product; Figure 2D shows that a subscriber whose card address is 0x884800010001 or 0x884800010003 is authorized while a subscriber with other card address is not authorized; the subscriber group-based multicast is achieved through 220 and 230, therefore the problem associated with unicast in the prior art, in which every subscriber should be offered a message, is solved and a group of subscribers may share a message.

2240: Upon receiving the EMM, the STB of a subscriber included in the subscriber group identified by the message authenticates the subscriber according to the common address attribute of the group. For example, the STB authenticates the subscriber according to the first 38 bits of the card address 0×884800010000, and can receive the EMM if the card address of the subscriber corresponds to the common address attribute of the group. For example, if the card address of the subscriber is 0×884800010001, the STB can receive the EMM in which the multicast address is 0×884800010000; if the card address of the subscriber is 0×888800010000, the STB can not receive the EMM in which the multicast address is of 0×884800010000.

2250: The subscriber parses the EMM and obtains the information of whether the subscriber has subscribed to the product. The STB may parse the authorization data according to the EMM with frame structure described in 230; if a bit corresponding to the card address of the subscriber is 1, the bit indicates that the subscriber can receive the authorization, if the bit corresponding to the card address of the subscriber is 0, the bit indicates that the subscriber can not receive the authorization and previous authorization concerning the product is to be cleared.

By adopting the method described in this embodiment, the authorization message is transmitted to the STBs of subscribers through group-based multicast. The bandwidth requirement is reduced and the time for transmitting the authorization message to each of the STBs once is saved. If there are 10 products provided for 1 million subscribers, the 1 million subscribers are divided into 1,000 groups (1024 subscribers per group) and 10 product authorization messages are sent to each group, then there will be 10,000 authorization messages with a size of 188 bytes each in a transmission stream; if the bandwidth allocated for the authorization message is 50 Kbps, the time for transmitting the authorization message to each of the subscribers once will be expressed as (10,000 messages × 188 bytes / message × 8bits) / (50×1024 bps) = 293.75 seconds. In other words, about 300 seconds will be taken for transmitting the authorization message to each of the subscribers once, which is much more advantageous than the 300,800 seconds in the prior art.

In an embodiment of the present invention, the number of subscribers in a group may be more or less than 1024. For example, 512 subscribers are set in a group in this embodiment. The authorization process performed by the CAS is explained with reference to an authorization process concerning Product 2. In the authorization process the subscribers who have subscribed to a product are authorized by an EMM through group-based multicast. The authorization process is as follows.

2310: The digital TV CAS packs channels into products; for example, Product 1 includes CCTV1, CCTV2...CCTV8, Product 2 includes Phoenix TV, Product 3 includes ... etc.

2320: The digital TV CAS sets a number of subscribers with a common address attribute in a group according to a subscriber group policy; for example, the first 39 bits of the card address 0x884800010000, which includes 6 bytes (48 bits), are taken as the common address attribute of a group, and the subscriber group policy is that a fixed number of subscribers with continuous card addresses should be set in a group, e.g., 512 subscribers whose card addresses are 0x884800010000, 0x884800010001, 0x884800010002..., 0x8848000101 FF respectively should be set in a group.

2330: The digital TV CAS encapsulates the authorization data, the product identity and the multicast address into an EMM, and transmits the EMM on the transmission network; for example, the EMM herein is shown in Figure 2E, in which the parameters related to this embodiment include a multicast address with 6 bytes, a product identity with 4 bytes, an SK' with 16 bytes and authorization data with 64 bytes, in which:
the multicast address is set as 0x884800010000;
the product identity is set as 0x0002, indicating Product 2 which includes Phoenix TV channel;
SK' is the encrypted SK, and the terminal device will decrypt SK' with GK saved by the terminal device to obtain SK upon receiving the EMM; and
the authorization data, of which each bit indicates a card address (subscriber) and whether the subscriber has subscribed to the product; each bit can be set as 0 or 1, and 0 indicates a subscriber has not subscribed to the product while 1 indicates a subscriber has subscribed to the product; Figure 2E shows that a subscriber whose card address is 0x884800010001 or 0x884800010003 is authorized while a subscriber with other card address is not authorized; the subscriber group-based multicast is achieved through 320 and 330, therefore the problem associated with unicast in the prior art, in which every subscriber should be offered a message, is solved and a group of subscribers may share a message.

2340: Upon receiving the EMM, the STB of a subscriber included in the subscriber group identified by the EMM authenticates the subscriber according to the common address attribute of the group. For example, the STB authenticates the subscriber according to the first 39 bits of the card address 0x884800010000, and can receive the EMM if the card address of the subscriber corresponds to the common address attribute of the group. For example, if the card address of the subscriber is 0x884800010001, the STB can receive the EMM in which the common address attribute is 0x884800010000, if the card address of the subscriber is 0x888800010000, the STB can not receive the EMM in which the common address attribute is 0x884800010000.

2350: The subscriber parses the EMM to obtain the information of whether the subscriber has subscribed to the product. The subscriber may parse the authorization data according to the EMM with frame structure described in 330; if a bit corresponding to the card address of the subscriber is 1, the bit indicates that the subscriber can receive the authorization, if the bit corresponding to the card address of the subscriber is 0, the bit indicates that the subscriber can not receive the authorization and previous authorization concerning the product is to be cleared.

In the above embodiments, one bit of the authorization data in an EMM is used for indicating one subscriber, optionally, multiple bits may be used for indicating one subscriber, e.g., two bits of the authorization data in an EMM in another embodiment are used for indicating a subscriber in a group of 512 subscribers during an authorization process concerning Product 2. In the authorization process, the subscribers who have subscribed to a product are authorized by an EMM through group-based multicast in the digital TV CAS. The authorization process includes basically the similar process as that in the above embodiments, and the difference is the frame structure of the EMM. Figure 2F is a schematic diagram of an EMM frame structure. As shown in Figure 2F, each two bits of the authorization data are used for indicating a subscriber; the bits "11" indicates that the subscriber has subscribed to the product and the bits "00" indicates that the subscriber has not subscribed to the product. The authorization data shown in Figure 2F indicate that a subscriber whose card address is 0x884800010001 or 0x884800010003 is authorized while a subscriber with other card address is not authorized. The scheme in these embodiments, compared with the prior art, all reduce the bandwidth requirement and save the time for transmitting the authorization message to each of the subscribers once.

The above embodiments mainly describe the subscriber authorization method in the digital TV system. The digital TV system includes DSTV system, DTTB system and CATV system. In the method described above, the CAS in the digital TV system is taken as the authorization management system which authorizes subscribers through group-based multicast; the subscribers are subscribers of STBs and the subscribers who have subscribed to digital TV products; the transmission network includes, but is not limited to, DSTV network, DTTB network, CATV network or IP network.

Figure 3A is the schematic diagram of the system used for authorizing subscribers in a cell phone TV system. The system shown in Figure 3A is similar to the system shown in Figure 2A, and the difference is that, in Figure 3A, the authorization management system includes the cell phone TV CAS or DRM system and the transmission network may include mobile communication network; the authorization objects are cell phone TV subscribers, e.g., Personal Digital Assistant (PDA) or 3G cell phone users; thus the authentication object may be the common address attribute of the cell phones or the PDA virtual card addresses, the cell phone numbers, the serial numbers of SIM cards or the IMSIs. For example, if the virtual card address is used in this embodiment, a virtual address with 6 bytes in the digital TV system may be adopted. That is, the first 38 bits of a card address 0×884800010000 which includes 6 bytes (48 bits) may be taken as the common address attribute of a group, and the group policy is that a fixed number of subscribers with continuous card addresses should be set in a group, e.g., 1024 subscribers whose virtual addresses are 0×8848000100 0×884800010 0x884800010002..., 0x8848000103FF respectively are set in a group. Optionally, the cell phone numbers, serial numbers of SIM cards or the IMSIs, which are unique for each cell phone terminal, may be adopted as the basis of the group division. When cell phone numbers are used for dividing subscribers, any number combination can be adopted, e.g., a number of subscribers whose cell phone numbers are 13888888880, 13888888881, 1388888888..., 13888888889 etc. may be set in a group, the first eight digits of 13888888000 are taken as the group number and the last three digits of these numbers (1,000 subscribers) may be taken as the internal numbers of the group, and the group policy is that subscribers with continuous card addresses should be set in a group. Such authorization management system provides group-based multicast for subscribers, reduces the bandwidth requirement and saves the time for transmitting authorization message to each of the subscribers once.

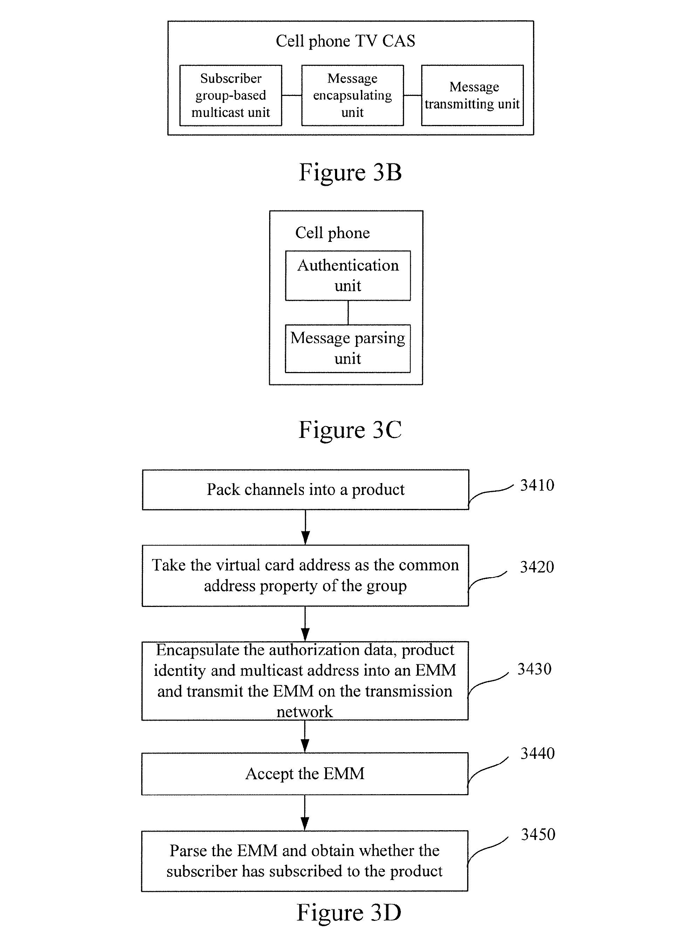

Figure 3B is the schematic diagram of the cell phone TV CAS or DRM system according to an embodiment of the present invention. In the cell phone TV CAS or DRM system, a subscriber group-based multicast unit and a message encapsulating unit are added. The subscriber group-based multicast unit and the message encapsulating unit are similar to the units shown in Figure 2B concerning both structures and functions and thus will not be detailed here. The cell phone TV CAS including the subscriber group-based multicast unit and the message encapsulating unit is able to transmit EMMs to terminal devices through subscriber group-based multicast to authorize the subscribers who have subscribed to the product. So the problem associated with the authorization method with unicast in the prior art is solved. Because the multicast address and the authorization data are employed to authorize subscribers in groups, the time for transmitting the authorization message to each of the subscribers once is saved.

Figure 3C is a schematic diagram of the terminal device, such as a cell phone or PDA, in the cell phone TV system according to an embodiment of the present invention. The terminal device includes an authentication unit and a message parsing unit which are similar to the units shown in Figure 2C concerning both structures and functions and thus will not be detailed here. The cell phone or PDA includes a video/audio play unit; after the message parsing unit parses the EMM, receives the authorization, and obtains SK, decrypts the ECM with SK to obtain CW and eventually de-scrambles program streams with CW, the video/audio play unit will play the received digital multimedia programs. Similarly, the cell phone or PDA including the authentication unit and the message parsing unit is able to authenticate the subscriber of the cell phone or PDA in a group according to the multicast address, if the subscriber of the cell phone or PDA has passed the authentication, the cell phone or PDA receives the authorization message and performs authorization.

An embodiment demonstrates the subscriber authorization method according to the subscriber authorization system provided in the above embodiment in the cell phone TV system.

The method is as shown in Figure 3D.

Block 3410: The cell phone TV CAS packs channels into products; for example, Product 1 includes CCTV1, CCTV2...CCTV8, Product 2 includes Phoenix TV, Product 3 includes ...etc.

Block 3420: The cell phone TV CAS sets a number of subscribers with a common address attribute in a group according to a subscriber group policy; in this embodiment, virtual card addresses are used for grouping subscribers, for example, if the virtual card address is used in this embodiment, a virtual address with 6 bytes in the digital TV system may be adopted. That is, the first 38 bits of a card address 0x884800010000 which includes 6 bytes (48 bits) may be taken as the common address attribute of a group, and the group policy is that a fixed number of subscribers with continuous card addresses should be set in a group, e.g., 1024 subscribers whose virtual addresses are 0x884800010000, 0×884800010001, 0×884800010002..., 0×8848000103FF respectively are set in a group. Optionally, the cell phone numbers, serial numbers of SIM cards or the IMSIs, which are unique for each cell phone terminal, may be adopted as the basis of the group division. When cell phone numbers are used for dividing subscribers, any number combination can be adopted, e.g., a number of subscribers whose cell phone numbers are 13888888880, 13888888881, 1388888888..., 13888888889 etc may be set in a group, the first 8 digits of 13888888000 are taken as the group number and the last 3 digits of these numbers (1,000 subscribers) may be taken as the internal numbers of the group.

Block 3430: The cell phone TV CAS encapsulates the authorization data, the product identity and the multicast address into an EMM, and transmits the EMM on the transmission network. The EMM in this embodiment is shown in Figure 3, in which the parameters related to this embodiment include a multicast address with 6 bytes, a product identity with 4 bytes, an SK' with 16 bytes and an authorization data with 64 bytes, in which:
the multicast address is set as 0×884800010000;
the product identity is set as 0x0002, indicating Product 2 which includes Phoenix TV channel;
SK' is the encrypted SK, and the cell phone or PDA will decrypt SK' with GK saved by the cell phone or PDA to obtain SK upon receiving the EMM; and
the authorization data, of which each bit indicates a card address (subscriber) and whether the subscriber has subscribed to the product; each bit may be set as 0 or 1, wherein 0 indicates a subscriber has not subscribed to the product while 1 indicates a subscriber has subscribed to the product. As shown in Figure 2D, in this embodiment a subscriber whose card address is 0x884800010001 or 0x884800010003 is authorized while a subscriber with other card address is not authorized; the subscriber group-based multicast is achieved through Blocks 3420 and 3430, therefore the problem associated with unicast in the prior art, in which every subscriber should be offered a message, is solved and a group of subscribers may share a message.

Block 3440: Upon receiving the EMM, the cell phone or PDA of a subscriber included in the group identified by the EMM authenticates the subscriber according to the common address attribute of the group. For example, the cell phone or PDA authenticates the subscriber according to the first 38 bits of the card address 0x884800010000 which includes 6 bytes (48 bits), and can receive the EMM if the card address of the subscriber corresponds to the common address attribute of the group. For example, if the card address of the subscriber is 0×884800010001, the cell phone or PDA can receive the EMM in which the common address attribute is 0×884800010000, if the card address of the subscriber is 0×888800010000, the cell phone or PDA can not receive the EMM in which the common address attribute is 0×884800010000.

Block 3450: The subscriber parses the EMM to obtain the information of whether the subscriber has subscribed to the product. The subscriber may parse the authorization data according to the EMM with frame structure described in Block 330; if the bit corresponding to the card address of the subscriber is 1, the bit indicates that the subscriber can receive the authorization, if the bit corresponding to the card address of the subscriber is 0, the bit indicates that the subscriber can not receive the authorization and previous authorization concerning the product is to be cleared.

In this method associated with the cell phone TV system, the authorization message is transmitted to the cell phones or PDAs of subscribers through group-based multicast, which effectively reduce bandwidth requirement and save time for transmitting the authorization message to each of the subscribers once. If there are 10 products provided for 1 million subscribers, the 1 million subscribers are divided into 1,000 groups (1024 subscribers per group) and 10 product authorization messages are transmitted to each group, then there will be 10,000 messages with a size of 188 bytes each in a transmission stream; if the bandwidth allocated for the authorization message is 50 Kbps, the time for transmitting the authorization message to each of the subscribers once will be expressed as (10,000 messages × 188 bytes / message ×8bits) / (50×1024 bps) = 293.75 seconds. In other words, about 300 seconds will be taken for transmitting the authorization message to each of the subscribers once, which is much more advantageous than the 300,800 seconds in the prior art.

In the cell phone TV system, a subscriber group may include 512 subscribers, in which case the process of the method is similar to the process of one of the above embodiments. Each two bits may be used for indicating a subscriber, in which case the process of the method is similar to the process of another one of the above embodiments. The authorization process in the cell phone TV system in this embodiments is similar to the authorization processes in the digital TV system in the above embodiments, and the difference is the multicast address, for example, in the cell phone TV system, a number unique to each cell phone terminal, including virtual card address, cell phone number, serial number of the SIM card and IMSI, may be taken as the common address attribute in this embodiment.

In an IPTV system, the subscriber authorization system is similar to the system shown in Figure 2A or 3A, and the difference is that the IPTV CAS or IPTV DRM system functions as the authorization management system. The authorization objects in the IPTV system include IPTV subscribers, such as online computers. Each of the online computers has a unique intelligent card, the common address attribute of the intelligent card addresses is used in the authentication process; in this embodiment, the first 39 bits of the intelligent card address 0×884800010000, which includes 6 bytes (48 bits), are taken as the common address attribute of a group, and the group policy is that subscribers with continuous card addresses should be set in a group. The structure of the system in the embodiment is similar to the structure of the systems in the above embodiments. The transmission network adopted in the embodiment may be an IP network. The authorization object may be subscribers who receive programs with IP STBs and TV sets; in this case, the common address attribute of the IP STB card addresses will be authenticated. Such authorization management system provides group-based multicast for subscribers, reduces bandwidth requirement and saves the time for transmitting authorization message to each of the subscribers once.

Similarly, a subscriber group-based multicast unit and a message encapsulating unit are added into the IPTV CAS or DRM system. The subscriber group-based multicast unit and the message encapsulating unit are respectively similar to the units shown in Figure 2B or 3B concerning both the functions and the structures and thus will not be detailed here. The IPTV CAS including the subscriber group-based multicast unit and the message encapsulating unit is able to transmit EMMs to terminal devices through subscriber group-based multicast to authorize the subscribers who have subscribed to the product. So the problem associated with the authorization with unicast in the prior art is solved. Because the multicast address and the authorization data are employed to authorize subscribers in groups, the time for transmitting the authorization message to each of the subscribers once is saved.

The terminal device in the IPTV system, such as online computer or IP STB, includes an authentication unit and a message parsing unit which are respectively similar to the units shown in Figure 2C or 3C concerning both structures and functions and thus will not be detailed here. The online computer may also include a video/audio play unit; after the message parsing unit parses the EMM, receives the authorization, and obtains SK, decrypts an ECM with SK to obtain CW and eventually de-scrambles program streams with CW, the video/audio play unit will play the received digital multimedia programs. The IP STB is connected to a normal TV set to form a terminal device with video/audio play function; the message parsing unit parses the EMM, receives the authorization, and obtains SK, decrypts the ECM with SK to obtain CW, and eventually de-scrambles program streams with CW, after that the normal TV set can play the received digital multimedia programs.

Similarly, the online computer or IP STB including the authentication unit and the message parsing unit is able to authenticate the subscriber of the online computer or IP STB in a group according to the multicast address, and if the subscriber has passed the authentication, the online computer or IP STB receives the authorization message and performs authorization.

The subscriber group-based multicast authorization process associated with the subscriber authorization system in the IPTV system is similar to the authorization processes described in the above embodiments, the difference is that the authorization management system used for authorizing subscribers through group-based multicast in the IPTV system includes the IPTV CAS or DRM system. In the IPTV system, the common address attribute of the intelligent card addresses of subscribers of online computers or the common address attribute of the IP STB card addresses is used for authentication; and in this embodiment the intelligent card addresses of subscribers of online computers or the IP STB card addresses are taken as the basis of the common address attribute of a group (and the determination of the common address attribute in the embodiment is similar to that in the digital TV system). The subscriber group-based multicast is achieved through the above process, therefore the problem associated with unicast in the prior art, in which every subscriber should be offered a message, is solved and a group of subscribers may share a message, the bandwidth requirement is thus reduced and the time for transmitting authorization message to each of the subscribers once is saved.

In the mobile TV system, the subscriber authorization system is similar to the system shown in Figure 2A or 3A, and the difference is that the subscriber authorization system in the mobile TV system includes the mobile TV CAS or DRM system. The authorization objects include car TVs or other dedicated terminals, such as a modified MP4 player, with the functions of playing video/audio programs and receiving multimedia program stream. In the system, virtual card addresses are assigned to devices including Motion Picture Experts Group Layer 3 (MP3) and Motion Picture Experts Group Layer 4 (MP4) players, the virtual card addresses may correspond to device identities (e.g., serial numbers of devices) or directly include device identities. The MP4 players may be the online terminals in the mobile TV system. The authorization management system authenticates the common address attribute of the virtual cards of car TVs. In the embodiment the first 39 bits of the card address 0×884800010000, which includes 6 bytes (48 bits), are taken as the common address attribute of a group; and the subscriber group policy is that a fixed number of subscribers with continuous card addresses should be set in a group, e.g., 512 subscribers whose card addresses are 0x884800010000, 0x884800010001, 0x884800010002..., 0×8848000101FF respectively should be set in a group; the connections in the system is similar to those in the system of the above embodiments. The transmission network in the mobile TV system may be a satellite transmission network, a digital terrestrial broadcast network, or a mobile communication network. Such authorization management system provides group-based multicast for subscribers, reduces bandwidth requirement and saves the time for transmitting authorization message to each of the subscribers once.

Similarly, a subscriber group-based multicast unit and a message encapsulating unit are added into the mobile TV CAS or DRM system. The subscriber group-based multicast unit and the message encapsulating unit are similar to the units shown in Figure 2B or 3B concerning both the functions and the structures and thus will not be detailed here. The mobile TV CAS including the subscriber group-based multicast unit and the message encapsulating unit is able to transmit EMMs to terminal devices through subscriber group-based multicast to authorize the subscribers who have subscribed to the product. So the problem in the prior art in which the authorization is performed through unicast is solved. Because the multicast address and the authorization data are employed to authorize subscribers in groups, time for transmitting the authentication information message to each of the subscribers once is saved.

Terminal devices including the authentication unit and the message parsing unit which are respectively similar to the units shown in Figure 2C or 3C concerning both structures and functions will not be detailed here. The terminal devices including car TVs or other dedicated terminals, such as a modified MP4 player, have the functions of playing video/audio programs and receiving multimedia program stream. The car TV or modified MP4 player may also includes a video/audio play unit; after the message parsing unit parses the EMM, receives the authorization, and obtains SK, decrypts the ECM with SK to obtain CW and eventually de-scrambles program streams with CW, the video/audio play unit may play the received digital multimedia programs.

Similarly, the car TV or modified MP4 player including the authentication unit and the message parsing unit is able to authenticate the subscriber of the car TV or modified MP4 player in a group according to the multicast address, and if the subscriber has passed the authentication, the car TV or modified MP4 player receives the authorization message and performs authorization.

The subscriber group-based multicast authorization process performed by the subscriber authorization system in the mobile TV system is similar to the authorization processes described in the above embodiments, the difference is that the authorization management system used for authorizing subscribers through group-based multicast in the mobile TV system includes the mobile TV CAS or DRM system. In the mobile TV system, the common address attribute of the virtual card addresses of car TVs or other dedicated terminals, such as a modified MP4 player, with the functions of playing video/audio programs and receiving multimedia program stream is used for authentication; in the embodiment the virtual card addresses are taken as the basis of the common address attribute of a group (and the determination of the common address attribute in the embodiment is similar to that in the digital TV system). The subscriber group-based multicast is achieved through the above process, therefore the problem associated with unicast in the prior art, in which every subscriber should be offered a message, is solved and a group of subscribers may share a message, the bandwidth requirement is reduced and the time for transmitting authorization message to each of the subscribers once is saved.

According to the subscriber authorization method in accordance with the embodiments of the present invention, subscribers can be authorized through group-based multicast and the terminal devices of the subscribers authorized are able to receive real-time broadcast or programs on demand from remote multimedia servers and to play local multimedia program streams. The subscriber authorization method in accordance with the embodiments of the present invention also reduces bandwidth consumption and saves the time for transmitting the authorization message to each of the subscribers once.

The groups in the embodiments include 1024 or 512 subscribers each, however, theoretically the number of subscribers in a group may vary and a group may include more subscribers when messages are transmitted in fragments, or includes fewer subscribers with a portion of the bytes as their addresses (e.g. 2048 subscribers per group or 10 subscribers per group).

In the embodiments, each one or two bits of the authorization data of the EMM is used for indicating a subscriber, optionally, the combination of multiple bits of the authorization data may also be used for indicating a subscriber.

The subscriber authorization method is also applicable to other media services transmitted broadcast or multicast, and authorization process is performed through subscriber group-based multicast in accordance with the processes of above embodiments. A subscriber group-based multicast unit and a message encapsulating unit should be added into the broadcast or multicast system used for other media service, and the terminal device in the system should include an authentication unit and a message parsing unit.

The foregoing description is only preferred embodiments of the present invention and is not for use in limiting the protection scope thereof. All modifications, equivalent replacements or improvements in the scope of the present invention's sprit and principles shall be included in the protection scope of the present invention.

## Claims

1. A subscriber authorization method, comprising:
transmitting an authorization message on a transmission network through group-based multicast;
performing authentication according to a multicast address, receiving the authorization message, parsing the authorization message to obtain authorization data of a subscriber, and performing authorization according to the authorization data.

2. The method of claim 1, wherein the group-based multicast comprises:
packing channels to a product and generating a product identity;
setting a number of subscribers with a common address attribute in a group according to a subscriber group policy;
encapsulating the authorization data, the product identity and the multicast address into the authorization message.

3. The method of claim 1 or 2, wherein the authorization message is an Entitlement Management Message, EMM.

4. The method of claim 2 or 3, wherein the subscriber group policy comprises: setting a fixed number of subscribers with continuous subscriber card addresses in a group.

5. The method of claim 4, wherein the fixed number of subscribers is 1024 or 512.

6. The method of claim 2, wherein the multicast address is determined according to the common address attribute of the group.

7. The method of claim 1 or 2, wherein the authorization data indicates the card address of the subscriber and whether the subscriber has subscribed to the product.

8. The method of claim 1 or 2, wherein each one bit, two bits or multiple bits of the authorization data are used for indicating the subscriber.

9. The method of claim 1, wherein the transmission network is one of the networks including a satellite transmission network, a digital terrestrial broadcast network, a mobile communication network, a cable transmission network and an Internet Protocol, IP network.

10. The method of claim 1, wherein performing authentication according to the multicast address and receiving the authorization message comprises:
determining that the card address of a subscriber corresponds to the common address attribute, receiving the authorization message.

11. The method of claim 8, wherein performing authorization according to the authorization data comprises:
when one bit of the authorization data is used for indicating the subscriber,
receiving the authorization if the value of the bit of the authorization data corresponding to the subscriber is 1; not receiving the authorization and clearing the previous authorization concerning the product if the value of the bit of the authorization data corresponding to the subscriber is 0;
when two bits of the authorization data are used for indicating the subscriber,
receiving the authorization if the value of the bits of the authorization data corresponding to the subscriber is 11; not receiving the authorization and clearing the previous authorization concerning the product if the value of the bits of the authorization data corresponding to the subscriber is 00.

12. A subscriber authorization system, comprising:
an authorization management system, configured to group the subscriber, determine a multicast address according to a common address attribute of a group, encapsulate an authorization message and transmit the authorization message on a transmission network;
a plurality of terminal devices, each of which is configured to perform authentication according to the multicast address, receive the authorization message, parse the authorization message and obtain the authorization data, and perform authorization according to the authorization data.

13. The subscriber authorization system of claim 12, wherein the transmission network in one of the networks including a satellite transmission network, a digital terrestrial broadcast network, a cable transmission network, a mobile communication network and an Internet protocol, IP network.

14. An authorization management system, comprising:
a subscriber group-based multicast unit, configured to group subscribers according to a subscriber group policy and determine a multicast address according to the common address attribute of a group;
a message encapsulating unit, configured to encapsulate the multicast address, authorization data and a product identity into an authorization message; and
a message transmitting unit, configured to transmit the authorization message.

15. The authorization management system of claim 14, wherein the authorization management system is used in a digital television, TV, Condition Access System, CAS, an Internet Protocol Television, IPTV, CAS, a mobile TV CAS, and a cell phone TV CAS.

16. The authorization management system of claim 14, wherein the authorization management system is used in a digital TV, Digital Rights Management, DRM, system, an IPTV DRM system, a mobile TV DRM system and a cell phone TV DRM system.

17. A terminal device, comprising:
an authentication unit, configured to perform authentication according to a common address attribute;
a message parsing unit, configured to parse an authorization message to obtain authorization data after the common address attribute is authenticated, and perform authorization according to the authorization data.

18. The terminal device of claim 17, further comprising:
a video/audio play unit, configured to play digital multimedia program streams de-scrambled with a control word parsed by the message parsing unit.

19. The terminal device of claim 17, wherein the terminal device is one of: a set-top box, STB, a cell phone, a Motion Picture Experts Group Layer 3, MP3 player, a Motion Picture Experts Group Layer 4, MP4, player, a Personal Digital Assistant, PDA, and a computer.
